# FASCICULE DE BREVET EUROPEEN

(11) **EP 1 930 621 B1**
(45) Date de publication et mention de la délivrance du brevet: **28.10.2009**
(21) Numéro de dépôt: 07300947.4
(22) Date de dépôt: 13.04.2007
(51) Int. Cl.: F16F 9/58, B60G 15/06

(54) **Amortisseur à butée de rebond fixée sur le tube extérieur**
Stoßdämpfer mit auf dem Außenrohr befestigtem Pralldämpfer
Shock absorber with rebound stop fixed on the outer tube

(30) Priorité: 17.11.2006 GB 0622937
(43) Date de publication de la demande: 11.06.2008
(73) Titulaire: Delphi Technologies, Inc., Troy, MI 48007 (US)
(72) Inventeur: Bernard, Stéphane, 91430 Igny (FR); Marchand, Jocelyn, 92300 Levallois Perret (FR)
(74) Mandataire: Denton, Michael John

(56) Documents cités:
- EP-A- 1 403 103
- DE-C- 964 930
- DE-C1- 4 420 134
- GB-A- 752 284
- JP-A- 60 222 306
- US-A- 3 726 368
- REIMPELL, J. AND STOLL, H.: "Fahrwerktechnik: Stoß- und Schwingungsdämpfer" 1989, VOGEL BUCHVERLAG WÜRZBURG , DEUTSCHLAND , XP002474152 ISBN: 3-8023-0202-8 2. Auflage * page 176; figure 7.6 *

## Description

Le domaine de la présente invention est celui de l'industrie automobile et, en particulier, des amortisseurs simples tubes pour véhicules à moteur.

Les amortisseurs du type Mc Pherson simple tube à haute pression, comportent de façon connue deux tubes coaxiaux coulissant l'un dans l'autre. Le tube intérieur est fermé et forme un cylindre dans lequel un piston circule entre deux chambres remplies d'un liquide hydraulique. Ce piston est relié de façon rigide par une tige, moyennant la conservation de l'étanchéité du tube intérieur, à une des extrémités du tube extérieur. Il présente un conduit de communication faisant restriction entre les deux chambres, à travers lequel passe le liquide hydraulique afin d'assurer l'amortissement des oscillations créées par la route. Ces amortisseurs sont pourvus de dispositifs pour les mouvements de grande amplitude liés par exemple au passage sur un dos d'âne ou à des cahots importants. Dans ces cas extrêmes le tube intérieur peut venir en contact avec le fond du tube extérieur. Pour éviter des détériorations et amortir le choc associé, un butoir élastique est mis en place au fond du tube extérieur.

A la descente par exemple d'un dos d'âne ou d'un trottoir, ou bien à la suite du contact sur ce butoir élastique l'amortisseur se détend lors d'une phase de rebond. Le tube intérieur remonte brutalement et cette fois-ci, la partie inférieure du piston peut venir en butée contre le fond du tube intérieur. Les amortisseurs actuels disposent donc d'un second butoir élastique, positionné sur la face inférieure du piston pour amortir ce choc. Mais lors de ce contact de rebond, la tige du piston est violemment sollicitée et les contraintes associées peuvent aboutir à sa détérioration. Cette tige constitue de ce fait un point de fragilité des amortisseurs traditionnels et l'origine d'une limitation de leur durée de vie.

L'amortisseur tel que décrit à la page 176 du livre: Fahrwerktechnik: Stoß- und Schwingungsdämpfer; ISBN: 3-8023-0202-8; XP: 002474152 est considéré comme étant l'état de technique le plus proche de l'invention décrit par le préambule de la revendication 1.

La présente invention a pour but de remédier à ces inconvénients en proposant un amortisseur simple tube ne présentant pas certains des inconvénients de l'art antérieur et en particulier qui transmette les efforts lors d'un contact de rebond sans passer par la tige du piston.

A cet effet, l'invention a pour objet un amortisseur simple tube pour véhicule terrestre comprenant un tube intérieur se déplaçant dans un tube extérieur et un piston principal coulissant à l'intérieur dudit tube intérieur en délimitant deux chambres hydrauliques supérieure et inférieure, ledit piston étant rigidement lié à l'extrémité inférieure dudit tube extérieur par une tige de piston principal, ledit tube intérieur présentant à sa partie inférieure une surface d'arrêt pour cahot faisant face à un butoir pour cahot porté par l'extrémité inférieure dudit tube extérieur et agissant comme un moyen élastique, l'amortisseur comprenant en outre un manchon de guidage axial positionné entre lesdits tubes intérieur et extérieur, fixé audit tube extérieur et se terminant à sa partie inférieure par une pièce annulaire fermant la cavité entre les deux tubes, caractérisé en ce que ladite pièce annulaire porte un moyen élastique susceptible d'être comprimé en butée par un organe de compression lié à la structure dudit tube intérieur.

Le positionnement d'une butée de rebond sur le manchon évite que les chocs entre les deux tubes lors des rebonds après des cahots importants ne passent par la tige du piston principal.

Avantageusement la distance de la pièce annulaire à la face supérieure de l'organe de compression lorsque le moyen élastique est déformé en compression, est inférieure à la distance séparant la face inférieure du piston principal de l'extrémité basse du tube intérieur.

Cette configuration garantit que le choc lors du rebond s'effectuera sur la butée de rebond et non pas sur la partie inférieure du piston principal.

Dans un mode particulier de réalisation le moyen élastique est un ressort hélicoïdal s'étendant dans la cavité formée par les deux tubes intérieur et extérieur.

Dans un autre mode particulier de réalisation le moyen élastique est un butoir en matériau élastique.

De façon préférentielle l'organe de compression est constitué par la face supérieure d'une plaque à ressort et rebond constituée par le fond dudit tube intérieur s'étendant au-delà du diamètre dudit tube intérieur.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en coupe d'un amortisseur simple tube selon l'art antérieur;
- la figure 2 est une vue en coupe d'un amortisseur simple tube selon l'invention.

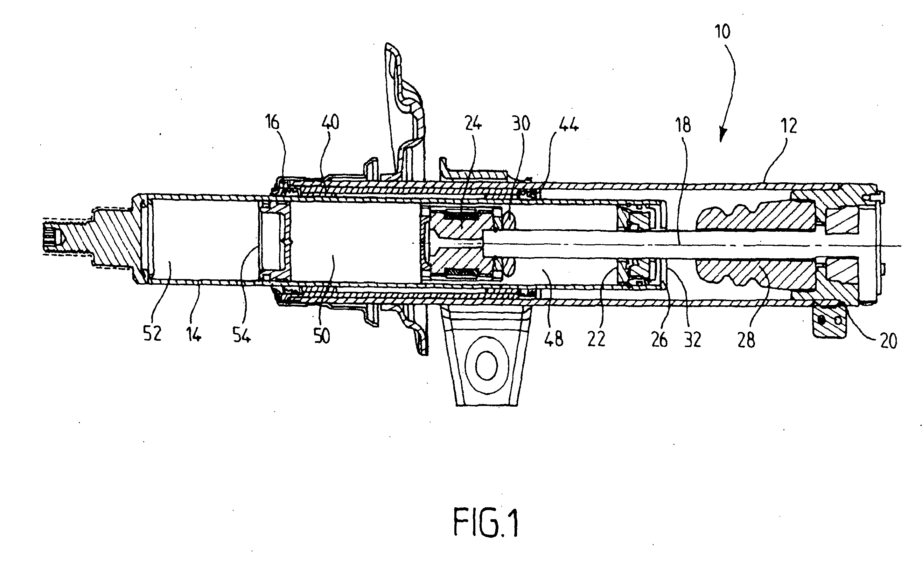

En se référant à la figure 1, on voit un amortisseur 10 dont l'extrémité gauche a vocation à être reliée à la structure du véhicule, et qui sera dénommé partie haute dans la suite de la description; l'extrémité droite sera reliée, via des pièces intermédiaires connues de l'homme du métier, à l'arbre de la roue et sera dénommée partie basse. L'amortisseur présente un tube intérieur 14 fermé, comportant trois cavités placées les unes à la suite des autres. Une première cavité 52, placée en haut, contient un gaz comprimé et est séparée par un piston secondaire 54, se déplaçant librement, d'une chambre hydraulique supérieure 50. Un piston principal 24 sépare les deux chambres hydrauliques supérieure 50 et inférieure 48 et présente une restriction calibrée, de section efficace variable selon la vitesse de compression ou de détente de l'amortisseur, par laquelle passe le liquide hydraulique lorsque l'amortisseur assure sa fonction.

Le tube intérieur est placé à l'intérieur d'un tube extérieur 12, de diamètre légèrement supérieur, dans lequel il coulisse. Le tube intérieur se déplace dans le tube extérieur en coulissant sur un manchon de guidage axial 40, placé entre les deux tubes, qui a pour objet de faciliter le glissement du tube intérieur et d'assurer une lubrification entre ces deux pièces. Le manchon est lié rigidement, dans sa partie haute, à l'extrémité haute 16 du tube extérieur et se termine, dans sa partie basse, par une pièce annulaire, telle qu'un anneau cylindrique 44, qui assure l'étanchéité de l'enceinte lubrifiée.

Le tube intérieur est fermé à son extrémité inférieure par une plaque, dite plaque à cahot 26, qui vient, lors des déplacements importants du tube intérieur, au contact d'un butoir de cahot 28, fixé sur l'extrémité basse 20 du tube extérieur. Cette extrémité basse 20 porte aussi la tige 18 du piston principal 24 qui lui est rigidement fixée. A la partie inférieure du piston 24 est attaché un butoir de rebond 30 destiné à amortir le choc du piston 24 sur l'extrémité basse 22 du tube intérieur lors du rebond du tube extérieur après un cahot.

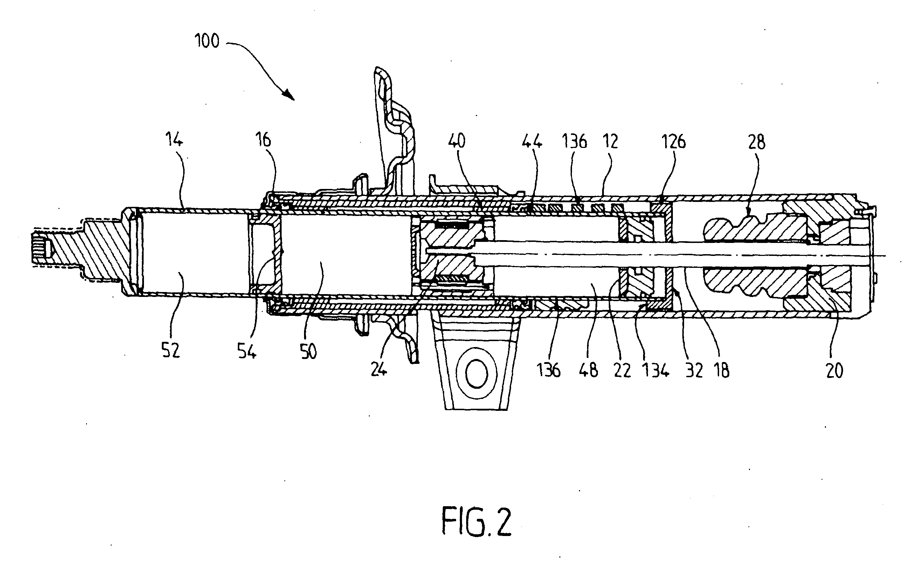

En se référant à la figure 2, on va maintenant décrire un amortisseur simple tube 100 selon un mode de réalisation de l'invention. Les éléments de l'amortisseur identiques à l'amortisseur de l'art antérieur décrit sur la figure 1 sont désignés par le même chiffre de référence, et ne sont pas décrits à nouveau.

Ici le butoir de rebond qui était fixé préalablement sur le piston principal est supprimé. La plaque à cahot 26 est remplacée par une plaque à cahot et rebond 126 qui dépasse radialement du tube intérieur et s'étend jusqu'au tube extérieur de façon à recouvrir la couronne circulaire correspondant à l'épaisseur du manchon de guidage axial 40; un jeu est toutefois ménagé avec le tube extérieur de façon à assurer un déplacement relatif des deux pièces sans frottement. Cette plaque présente à sa partie inférieure, comme dans l'art antérieur, une surface d'arrêt pour cahots 32 faisant face au butoir de cahot 28. La partie qui en dépasse radialement fait fonction d'une surface d'arrêt pour rebond 134, et est positionnée en regard d'un moyen d'amortissement élastique, dit butoir de rebond 136. Le moyen élastique 136 est présenté dans la partie supérieure de la figure 2 comme un ressort hélicoïdal et dans la partie inférieure comme un butoir en matériau élastique. Le butoir de rebond, qui s'étend dans la cavité laissée libre entre les deux tubes en dessous du manchon de guidage axial 40, est fixé, par sa partie supérieure, à l'anneau 44 qui est situé à la partie inférieure du manchon de guidage axial. L'anneau 44 est positionné sur le tube extérieur à une position telle que, lorsque le butoir de rebond est complètement enfoncé après un rebond, la face inférieure du piston principal ne vienne pas en contact avec la partie inférieure du tube intérieur. Pour cela la distance entre la pièce annulaire 44 et la face supérieure de l'organe de compression 134 lorsque le butoir de rebond 136 est déformé en compression, est inférieure à la distance séparant la face inférieure du piston principal 124 de l'extrémité basse 22 du tube intérieur.

On va maintenant décrire le fonctionnement de l'amortisseur selon l'invention.

L'amortisseur est fixé par sa partie haute à la structure du véhicule tandis que sa partie basse est fixée à un des éléments reliés à l'axe de la roue à amortir. Un dispositif élastique, tel qu'un ressort hélicoïdal, est fixé en parallèle aux mêmes organes du véhicule.

Lors du passage du véhicule sur un dos d'âne ou sur toute irrégularité importante de la route, l'amortisseur est comprimé violemment et le tube extérieur 12 se déplace rapidement vers le haut en exerçant un effort important sur le piston principal 24 et en comprimant le liquide contenu dans la chambre hydraulique supérieure 50. Le déplacement étant très rapide dans le cas d'un dos d'âne, le liquide hydraulique n'a pas le temps de réagir et de générer l'effort d'amortissement nécessaire pour s'opposer au mouvement de rebond et l'extrémité basse 20 du tube extérieur 12 vient en butée contre le tube intérieur. La plaque à cahot et rebond 126 écrase, par sa surface d'arrêt pour cahot 32, le butoir de cahot 28 qui, étant élastique, renvoie le tube extérieur vers le bas avec une certaine vitesse. Cette phase de rebond, dans le cas d'un dos d'âne important, d'une dépression de la route ou même lors d'une simple descente de trottoir, est suffisamment énergétique et suffisamment rapide pour que, dans l'art antérieur, la partie inférieure du piston principal vienne frapper le fond du tube intérieur, avant que le liquide hydraulique ait pu absorber suffisamment d'énergie.

Dans le mode de réalisation de l'invention, lors du rebond après un cahot, le butoir de rebond 136, dans le déplacement du tube extérieur vers le bas, vient en contact avec la plaque à cahot et rebond 126 au niveau de sa face d'arrêt pour rebond 134, puisque celle-ci dépasse radialement du tube intérieur. La surface d'arrêt pour rebond 134, qui est liée à la structure du tube intérieur, sert d'organe de compression du butoir de rebond pour comprimer celui-ci jusqu'à l'amener en butée. Le butoir de rebond se détend ensuite et renvoie à nouveau le tube extérieur vers le haut. Du fait de la position de l'anneau 44 sur le tube extérieur, explicitée ci-dessus, l'effort engendré par le choc de rebond n'est pas transmis par la tige du piston principal 24 au piston lui-même, mais par la plaque à cahot et rebond 126 au manchon 40 et in fine au tube extérieur.

Le piston principal revient peu à peu à sa position nominale dans le tube intérieur. L'amortisseur est alors prêt pour absorber de nouveaux chocs qui seraient transmis par la route au véhicule.

Bien que l'invention ait été décrite en relation avec un mode de réalisation particulier, il est bien évident qu'elle n'y est nullement limitée et qu'elle comprend tous les équivalents techniques des moyens décrits, ainsi que leurs combinaisons si celles-ci entrent dans le cadre de l'invention.

## Revendications

1. Amortisseur simple tube pour véhicule terrestre comprenant un tube intérieur (14) se déplaçant dans un tube extérieur (12) et un piston principal (24) coulissant à l'intérieur dudit tube intérieur en délimitant deux chambres hydrauliques supérieure (50) et inférieure (48), ledit piston étant rigidement lié à l'extrémité basse (20) dudit tube extérieur par une tige de piston principal (18), ledit tube intérieur (14) présentant à sa partie inférieure une surface d'arrêt pour cahot (32) faisant face à un butoir pour cahot (28) porté par l'extrémité basse (20) dudit tube extérieur et agissant comme un moyen élastique, l'amortisseur comprenant en outre un manchon de guidage axial (40) positionné entre lesdits tubes intérieur et extérieur, fixé audit tube extérieur et se terminant à sa partie inférieure par une pièce annulaire (44) fermant la cavité entre les deux tubes, **caractérisé en ce que** ladite pièce annulaire porte un moyen élastique (136) susceptible d'être comprimé en butée par un organe de compression (134) lié à la structure dudit tube intérieur.

2. Amortisseur simple tube selon la revendication 1 dans lequel la distance de la pièce annulaire (44) à la face supérieure de l'organe de compression (134) lorsque le moyen élastique (136) est en butée de compression, est inférieure à la distance séparant la face inférieure du piston principal (124) de l'extrémité basse (22) du tube intérieur.

3. Amortisseur simple tube selon la revendication 1 ou 2 dans lequel le moyen élastique (136) est un ressort hélicoïdal s'étendant dans la cavité formée par les deux tubes intérieur (14) et extérieur (12).

4. Amortisseur simple tube selon la revendication 1 ou 2 dans lequel le moyen élastique (136) est un butoir en matériau élastique.

5. Amortisseur simple tube selon l'une des revendications 1 à 4 dans lequel l'organe de compression (134) est constitué par la face supérieure d'une plaque à cahot et rebond (126) constituée par le fond dudit tube intérieur s'étendant au-delà du diamètre dudit tube intérieur.

## Claims

1. Single-tube damper for land vehicle comprising an inner tube (14) being displaced within an outer tube (12) and a main piston (24) sliding inside the said inner tube to define two upper (50) and lower (48) hydraulic chambers, the said piston being rigidly attached to the lower end (20) of the said outer tube by a main piston rod (18), the said inner tube (14) presenting at its lower part a bump stop surface (32) opposite a bump stop (28) carried by the lower end (20) of the said outer tube and acting as an elastic means, the damper also comprising an axial guiding sleeve (40) positioned between the said inner and outer tubes, fixed to the said outer tube and terminating at its lower part with an annular piece (44) closing the cavity between the two tubes, **characterised by** the fact that the said annular piece carries an elastic means (136) able to be compressed to the maximum extent by a compression organ (134) attached to the structure of the said inner tube.

2. Single tube damper as described in claim 1 in which the distance from the annular piece (44) to the upper face of the compression organ (134) when the elastic means (136) is compressed to the maximum extent, is less than the distance separating the lower face of the main piston (124) from the lower end (22) of the inner tube.

3. Single tube damper as described in claim 1 or 2 in which the elastic means (136) is a helical spring extending in the cavity formed by the two inner (14) and outer (12) tubes.

4. Single tube damper as described in claim 1 or 2 in which the elastic means (136) is a stop made of elastic material.

5. Single tube damper as described in one of claims 1 to 4 in which the compression organ (134) is formed by the upper face of a bump and rebound plate (126) formed by the bottom of the said inner tube extending beyond the diameter of the said inner tube.

## Patentansprüche

1. Einrohrdämpfer für Landfahrzeug, umfassend ein Innenrohr (14), das sich in einem Außenrohr (12) bewegt, und einen Hauptkolben (24), der im Inneren des Innenrohrs gleitet, indem er zwei hydraulische Kammern, eine obere (50) und eine untere (48), abgrenzt, wobei der Kolben mit dem unteren Ende (20) des Außenrohrs durch eine Hauptkolbenstange (18) starr verbunden ist, wobei das Innenrohr (14) in seinem unteren Teil eine Stoßstoppfläche (32) aufweist, die einem Stoßpuffer (28) gegenübersteht, der von dem unteren Ende (20) des Außenrohrs getragen ist und wie ein elastisches Mittel wirkt, wobei der Dämpfer außerdem eine axiale Führungsbuchse (40) umfasst, die zwischen dem Innenrohr und dem Außenrohr positioniert ist, an dem Außenrohr befestigt ist und in ihrem unteren Teil mit einem ringförmigen Teil (44) endet, das den Hohlraum zwischen den beiden Rohren schließt, **dadurch gekennzeichnet, dass** das ringförmige Teil ein elastisches Mittel (136) trägt, das am Anschlag durch ein mit der Struktur des Innenrohrs verbundenes Kompressionsorgan (134) komprimiert werden kann.

2. Einrohrdämpfer nach Anspruch 1, bei dem der Abstand des ringförmigen Teils (44) von der Oberseite des Kompressionsorgans (134), wenn das elastische Mittel (136) in Kompressionsanschlag ist, kleiner als der Abstand der Unterseite des Hauptkolbens (124) vom unteren Ende (22) des Innenrohrs ist.

3. Einrohrdämpfer nach Anspruch 1 oder 2, bei dem das elastische Mittel (136) eine Schraubenfeder ist, die sich in dem von dem Innenrohr (14) und dem Außenrohr (12) gebildeten Hohlraum erstreckt.

4. Einrohrdämpfer nach Anspruch 1 oder 2, bei dem das elastische Mittel (136) ein Puffer aus elastischem Material ist.

5. Einrohrdämpfer nach einem der Ansprüche 1 bis 4, bei dem das Kompressionsorgan (134) von der Oberseite einer Stoß- und Prallplatte (126) gebildet ist, die von dem Boden des Innenrohrs gebildet ist und sich über den Durchmesser des Innenrohrs hinaus erstreckt.
